Europäisches Patentamt

European Patent Office

Office européen des brevets

(19)

(11) Numéro de publication : **0 076 205**
**B1**

(12) **FASCICULE DE BREVET EUROPÉEN**

(45) Date de publication du fascicule du brevet :
**11.12.85**

(51) Int. Cl.⁴ : **G 11 B 23/04**

(21) Numéro de dépôt : **82401724.8**

(22) Date de dépôt : **23.09.82**

(54) **Cassette magnétique à courroie élastique de tension.**

(30) Priorité : **30.09.81 FR 8118488**

(43) Date de publication de la demande :
**06.04.83 Bulletin 83/14**

(45) Mention de la délivrance du brevet :
**11.12.85 Bulletin 85/50**

(84) Etats contractants désignés :
**CH DE GB IT LI NL SE**

(56) Documents cités :
**DE-B- 1 118 485**
**FR-A- 1 427 665**
**FR-A- 2 301 471**
**US-A- 3 907 230**
**US-A- 4 146 194**
**US-A- 4 162 774**
**US-A- 4 219 169**

(73) Titulaire : **ENERTEC SOCIETE ANONYME**
**12, Place des Etats-Unis**
**F-92120 Montrouge (FR)**

(72) Inventeur : **Merle, Jean-Pierre**
**7, Rue Cécile Dinant**
**F-92140 Clamart (FR)**

(74) Mandataire : **Bentz, Jean-Paul**
**GIERS SCHLUMBERGER Service BREVETS 12, place**
**des Etats-Unis**
**F-92124 Montrouge Cedex (FR)**

Jouve, 18, rue St-Denis, 75001 Paris, France

**Description**

La présente invention concerne une cassette pour bande magnétique, du type comportant deux bobines d'enroulement d'une bande magnétique, des moyens pour diriger la bande magnétique devant un dispositif d'enregistrement-lecture, des moyens d'entraînement de la bande magnétique, un dispositif de réglage de tension comprenant un galet baladeur cylindrique maintenu pressé contre les deux bobines au moyen d'une courroie élastique sans fin tendue entre le galet baladeur et au moins un galet de renvoi en enveloppant une partie des périphéries en regard des bobines, la bande magnétique s'enroulant et se déroulant de façon tangentielle sur chaque bobine, respectivement en amont et en aval des lignes de pression du galet baladeur sur les deux bobines.

Une cassette de ce type est connue, par le brevet des Etats-Unis n° 3 907 230, au nom de la Demanderesse. On pourra se reporter à ce document pour comprendre exactement la fonction de la courroie, qui, par un effet d'allongement différentiel complexe assure une tension de bande.

Lorsqu'une telle cassette est utilisée dans des conditions telles que la bande subit des va-et-vient fréquents sur une faible partie de sa longueur, entre ces deux bobines, la courroie de tension dérive en hauteur sur le galet baladeur, sans que rien ne puisse l'arrêter.

L'invention a pour but de pallier cet inconvénient et donc de proposer une cassette présentant une grande stabilité de hauteur de la courroie en utilisation va-et-vient.

Ce but est atteint, conformément à l'invention, du fait qu'au moins un galet bombé est interposé entre le galet baladeur et la courroie comme défini par la partie caractérisante de la revendication 1.

L'action stabilisatrice du galet bombé est connue en soi, par exemple par US-A-4 146 194, mais l'invention a le mérite de faire apparaître qu'il est possible de placer un galet bombé satisfaisant à ces exigences malgré la trajectoire complexe (et en tous cas non circulatoire) du galet baladeur.

Avantageusement, le support est une plaquette susceptible de glisser sur le fond de la cassette, portant les axes des galets baladeur et bombé, et pourvue d'une encoche de guidage dans laquelle est engagé un téton saillant du fond de la cassette, afin de fixer la position du support en fonction de la position du galet baladeur.

Avantageusement, la plaquette est maintenue sur le fond de la cassette au moyen d'un dispositif d'appui élastique.

Une telle plaquette de support apporte une solution ingénieuse et d'exécution simple au problème du report sensiblement intégral de la tension exercée par la courroie sur le galet bombé au galet baladeur, dans toutes les positions du galet baladeur.

L'invention sera mieux comprise grâce à la description qui va suivre d'un mode de réalisation préféré, en référence aux dessins annexés sur lesquels :

la figure 1 est une vue schématique en plan d'une cassette conforme à l'invention (couvercle ôté) ;

la figure 2 est une coupe II-II de la figure 1, montrant le support des galets baladeur et bombé ;

la figure 3 représente une variante du montage du galet baladeur de la figure 2.

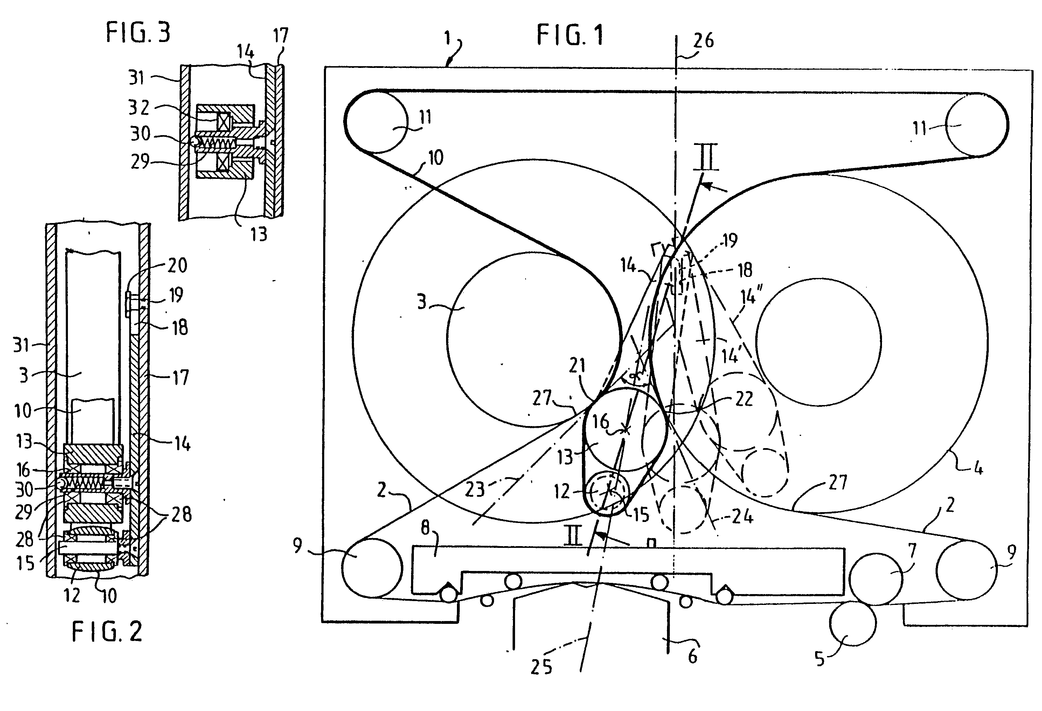

La figure 1 montre une cassette 1 dont la bande magnétique 2 est déroulée d'une bobine 3 sur une bobine 4, ou inversement, au moyen d'un galet d'entraînement 5, appartenant au dispositif d'enregistrement — lecture dans lequel la cassette est insérée. La bande 2, qui est pincée entre un galet presseur 7 et le galet d'entraînement 5, et tirée par ce dernier, passe devant une tête magnétique 6 appartenant au dispositif de lecture.

Des moyens 8 associés à des galets 9 permettent le guidage de la bande magnétique 2 devant le dispositif de lecture-enregistrement 5, 6.

Le dispositif de réglage de la tension de bande comporte une courroie élastique 10 passant sur deux galets de renvoi 11, enveloppant partiellement les bobines 3 et 4, et passant sur un galet bombé 12 associé à un galet baladeur cylindrique 13 maintenu pressé contre les bobines 3 et 4 par la tension élastique de la courroie 11 exercée sur le galet bombé 12 et transmise au galet 13 via le support commun 14 des axes 15 et 16 des galets bombé 12 et baladeur 13.

Le support 14 est constitué d'une plaquette allongée glissant avec le minimum de frottement sur le fond 17 de la cassette 1. La position de la plaquette 14 est déterminée, d'une part, par la position du galet baladeur 13 (cette dernière position étant fonction du déroulement de la bande), et, d'autre part, par un dispositif fixant la trajectoire du galet bombé 12 : il s'agit, en l'occurrence, d'une encoche rectiligne de guidage 18 prévue à une extrémité de la plaquette d'entrée sur le plan II-II passant par les axes 15-16 des galets bombé 12 et baladeur 13, et située, par rapport au galet baladeur 13, du côté opposé au galet bombé 12. Un téton 19 à tête 20 fixé au fond 17 de la cassette, dans le plan médian de trace 26, guide l'encoche 18 lors du déplacement du galet baladeur 13. Deux autres positions 14' et 14" de la plaquette 14 sont représentées en pointillés sur la figure 1.

Ce dispositif de fixation de trajectoire 18-19 permet d'une part, de respecter la trajectoire propre du galet baladeur 13 (trajectoire non circulaire), et de ne pas influencer la valeur globale de la pression exercée par le galet 13 sur les bobines 3 et 4, en admettant que les frottements de la plaquette 14 sur le fond 17, et que les forces développées à l'endroit du contact du téton 19 sur les parois de l'encoche 18 sont négligeables au regard de ladite pression (ce qui se vérifie pratiquement pour une encoche 18 centrée sur le plan II-II).

D'autre part, en déterminant l'orientation de la plaquette 14, le dispositif 18-19 fixe la position du galet bombé 12, pour chaque position du galet baladeur 13, et, partant, fixe la répartition et l'orientation des forces de pression transmises respectivement à chaque bobine 3 et 4, par ledit galet baladeur 13.

L'analyse rigoureuse et même la modélisation par calculateur des forces entrant en jeu au niveau des lignes de contact 21 et 22 du galet baladeur 13 avec les bobines 3 et 4 (à l'épaisseur de la courroie 10 près) s'avèrent extrêmement complexes, du fait que les forces développées par la courroie élastique 10 dépendent d'une multitude de paramètres et sont mal connues, notamment dans leur aspect dynamique.

Aussi le choix des dimensions et de la trajectoire imposée au galet bombé 12 par la disposition du support 14 repose pour une large part sur une expérimentation propre à chaque type de cassette.

D'une façon générale, il peut être retenu comme principe que, pour toutes ses positions, le galet bombé 12 est situé dans la zone de la cassette comprise dans le dièdre variable d'angle α formé par l'intersection des plans de traces 23 et 24, plans tangents communs respectifs du galet baladeur 13 et des bobines 3 et 4 (en négligeant encore l'épaisseur de la courroie 10).

En fait, il apparaît souhaitable, pour répercuter de façon relativement équilibrée les pressions de la courroie sur chacune des deux bobines, que l'axe 15 du galet bombé 12 soit maintenu au voisinage du plan bissecteur (de trace 25) du dièdre d'angle α. Ceci n'est vrai, bien évidemment, que si un seul galet bombé 12 est utilisé. Mais on peut disposer deux ou plusieurs galets bombés (ou même un galet bombé et un ou plusieurs galets cylindriques de renvoi) coopérant avec le galet baladeur 13 via un support 14 ; la position de ces galets peut alors être sensiblement symétrique par rapport au plan bissecteur de trace 25.

L'exemple de réalisation d'une cassette conforme à l'invention, telle que représentée sur les dessins annexés, a donné parfaitement satisfaction.

Le galet bombé 12 (ici un galet biconique) présente un diamètre moyen sensiblement moitié du diamètre du galet baladeur 13, et a été monté, sur la plaquette 14, au voisinage immédiat du galet presseur, la longueur moyenne du bras compris entre l'axe 16 du galet baladeur et le téton 19 atteignant pratiquement le triple de l'entr'axe séparant les deux galets 12 et 13. Il doit cependant être compris que ces proportions, nullement critiques, ne sont données qu'à titre d'exemple et ne doivent pas être considérées comme limitatives.

Quant aux dimensions du galet baladeur 13, elles sont limitées d'un côté par le fait que le galet ne doit pas pouvoir passer entre les deux bobines, et, d'un autre côté, par le fait que la bande magnétique 2 doit s'enrouler et se dérouler de façon tangentielle sur chaque bobine (en 27) respectivement en amont et en aval des lignes de pression (ou de contact 22, 21) du galet baladeur 13 sur les deux bobines.

Comme le montre la fig. 2, les galets 12 et 13 sont montés de façon connue au moyen de roulements 28 sur leurs axes respectifs 15 et 16. On notera que l'un des axes, l'axe 16 du galet baladeur, est creux et loge un ressort 29 poussant une bille 30 contre la face supérieure 31 de la cassette, ce qui assure la stabilité en hauteur de la plaquette 14, donc du galet biconique 15, et, partant, de la courroie 10.

La figure 3 représente un mode de montage du galet baladeur 13, selon lequel le galet est monté de façon connue à l'aide d'un unique roulement à bille radial 32 qui laisse au galet 13 une légère liberté d'oscillation. Cette faculté d'oscillation permet au galet 13 de mieux supporter un défaut minime du positionnement respectif des bobines 3, 4, en conservant avec elles une ligne de contact pratiquement normale. Ce montage oscillant n'introduit pas de dérive en hauteur de la courroie 10 qui continue à être stabilisée par le galet bombé 12.

## Revendications

1. Cassette (1) pour une bande magnétique (2), du type comportant deux bobines (3, 4) d'enroulement d'une bande magnétique (2), des moyens (8, 9) pour diriger la bande magnétique (2) devant un dispositif d'enregistrement-lecture (6), des moyens d'entraînement (5, 7) de la bande magnétique (2), un dispositif de réglage de tension comprenant un galet baladeur cylindrique (13) maintenu pressé contre les deux bobines (3, 4) au moyen d'une courroie élastique sans fin (10) tendue entre le galet baladeur (13) et au moins un galet de renvoi (11) en enveloppant une partie des périphéries en regard des bobines (3, 4), la bande magnétique s'enroulant et se déroulant de façon tangentielle sur chaque bobine (3, 4) respectivement en amont et aval (27) des lignes de pression (21, 22) du galet baladeur (13) sur les deux bobines (3, 4), caractérisée en ce qu'au moins un galet bombé (12) est interposé entre le galet baladeur (13) et la courroie (10) dans la zone comprise dans le dièdre d'angle α formé par les plans tangents communs (23, 24) respectifs au galet baladeur (13) et à chacune des deux bobines (3, 4), des moyens (14) de report de tension étant prévus pour que la tension exercée par la courroie (10) sur le galet bombé (12) soit pratiquement intégralement transmise au galet baladeur (13) qui la répartit sur chacune des deux bobines (3, 4), lesdits moyens de report de tension consistant en un support mobile (14) rigide commun des axes (15, 16) des galets baladeur (13) et bombé (12), ce support (14) étant susceptible de suivre le mouvement du galet baladeur (13) et comportant un dispositif (18, 19) pour fixer à chaque instant la position du support (14) en fonction de la position du galet baladeur (13), ce dispositif ayant un mouvement autorisé de translation et de rotation autour d'un point de référence situé, par rapport au galet baladeur (13), du côté opposé au galet bombé (12).

2. Cassette selon la revendication 1, caractérisée en ce que le support (14) est une plaquette susceptible de glisser sur le fond (17) de la cassette (1), portant les axes (15, 16) des galets baladeur (13) et bombé (12), la plaquette étant pourvue d'une encoche de guidage (18) dans laquelle est engagé un téton (19) fixé au fond (17) de la cassette (1), permettant de fixer la position du support (14) en fonction de la position du galet baladeur (13).

3. Cassette selon la revendication 2, caractérisée en ce que la plaquette (14) est maintenue sur le fond (17) de la cassette au moyen d'un dispositif d'appui élastique (29, 30).

4. Cassette selon l'une quelconque des revendications 2 et 3, caractérisée en ce que le galet baladeur (13) est monté oscillant sur le support (14).

5. Cassette selon la revendication 1, caractérisée en ce que le galet bombé (12) est unique et maintenu dans le voisinage du plan bissecteur (25) du dièdre (23, 24) d'angle α.

6. Cassette selon l'une quelconque des revendications précédentes, caractérisée en ce que le galet bombé (12) est biconique.

## Claims

1. A cassette (1) for a magnetic tape (2), of the kind which comprises two reels (3, 4) for winding a magnetic tape (2), means (8, 9) for guiding the magnetic tape (2) in front of a record-write device (6), driving means (5, 7) for driving the magnetic tape (2), a tension adjustement device comprising a cylindrical slide roller (13) which is kept pressed against both reels (3, 4) by means of an endless elastic belt (10) stretched between the slide roller (13) and at least one idle roller (11) while surrounding a portion of the peripheries which face the reels (3, 4), wherein the magnetic tape winds and unwinds tangentially on each reel (3, 4) respectively upstream and downstream (27) of pressure lines (21, 22) of the slide roller (13) on both reels (3, 4) characterized in that at least one bulged roller (12) is interposed between the slide roller (13) and the belt (10) in the area comprised in the dihedron of angle α formed by the respective common planes (23, 24) tangent to the slide roller (13) and to each of both reels (3, 4), tension transfer means (14) being provided in order that the tension produced by the belt (10) on the bulged roller (12) be substantially entirely transmitted to the slide roller (13) which distributes it on each of both reels (3, 4), wherein said tension transfer means consist in a rigid common moving support (14) for the axes (15, 16) of the slide and bulged rollers (13) and (12), wherein this support (14) is capable of following the movement of the slide roller (13) and includes a device (18, 19) for fixing at each time the position of the support (14) according to the position of the slide roller (13), this device having an allowed translation and rotation motion about a reference point located on the slide opposite to the bulged roller (12) relative to the slide roller (13).

2. A cassette according to claim 1, characterized in that the support (14) is a plate capable of sliding on the bottom (17) of the cassette (1), supporting the axes (15, 16) of the slide and bulged rollers (13) and (12), the plate being provided with a guilding slot (18) in which is engaged a stud (19) attached to the bottom (17) of the cassette (1), allowing the position of the support (14) to be fixed according to the position of the slide roller (13).

3. A cassette according to claim 2, characterized in that the plate (14) is maintained on the bottom (17) of the cassette by means of an elastic suspension means (29, 30).

4. A cassette according to any of claims 2 and 3, characterized in that the slide roller (13) is swingably mounted on the support (14).

5. A cassette according to claim 1, characterized in that the bulged roller (12) is a single one and is maintained in the vicinity of the bisector plane (25) of the dihedron (23, 24) of angle α.

6. A cassette according to any of the previous claims, characterized in that the bulged roller (13) is biconical.

## Patentansprüche

1. Kassette (1) für Magnetband (2), vom Typ mit zwei Spulen (3, 4) zum Aufwickeln eines Magnetbandes (2), Mitteln (8, 9) zum Führen des Magnetbandes (2) vor einer Aufzeichnungs/Lesevorrichtung (6), Antriebsmitteln (5, 7) für das Magnetband (2), einer Vorrichtung zur Regelung der Spannung, die eine zylindrische Schubrolle (13) umfaßt, welche gegen die zwei Spulen (3, 4) über einen endlosen elastischen Riemen (10) angedrückt gehalten wird, der zwischen der Schubrolle (13) und wenigstens einer Umlenkrolle (11) gespannt ist, indem er einander gegenüberliegende Teile der Umfänge der Spulen (3, 4) einhüllt, wobei das Magnetband tangential auf jede Spule und von jeder Spule (3, 4) bewegungsaufwärts bzw. bewegungsabwärts (27) der Drucklinien (21, 22) der Schubrolle (13) an den zwei Spulen (3, 4) auf- bzw. abgewickelt wird, dadurch gekennzeichnet, daß wenigstens eine ballige Rolle (12) zwischen der Schubrolle (13) und dem Riemen (10) in der Zone eingefügt ist, welche in dem Zweiflach mit dem Winkel α enthalten ist, das durch die gemeinsamen Tangentenebenen (23, 24) der Schubrolle (13) und der einen bzw. anderen Spule (3, 4) gebildet ist, wobei Mittel (14) zur Spannungsverlagerung vorgesehen sind, damit die durch den Riemen (10) auf die ballige Rolle (12) ausgeübte Spannung praktisch vollständig auf die Schubrolle (13) übertragen wird, welche sie auf jede der zwei Spulen (3, 4) verteilt, wobei die genannten Mittel zur Spannungsverlagerung aus einem gemeinsamen starren beweglichen Träger (14) für die Achsen (15, 16) der Schubrolle (13) und der balligen Rolle (12) bestehen, wobei dieser Träger (14) der Bewegung der Schubrolle (13) folgen kann und eine Vorrichtung (18, 19) umfaßt, um jederzeit die Stellung des Trägers (14) in Abhängigkeit von der Stellung der Schubrolle (13) festzulegen, und wobei diese Vorrichtung eine zugelassene Translations- und Drehbewegung um einen Referenzpunkt aufweist, welcher in bezug auf die Schubrolle (13) auf der der balligen Rolle (12) gegenüberliegenden Seite liegt.

2. Kassette nach Anspruch 1, dadurch gekennzeichnet, daß der Träger (14) eine Platte ist, die auf dem Boden (17) der Kassette (1) gleiten kann und die Achsen (15, 16) der Schubrolle (13) und der balligen Rolle (12) trägt sowie mit einer Führungs-Ausnehmung (18) versehen ist, in welche ein Zapfen (19) eingreift, der am Boden (17) der Kassette (1) befestigt ist und die Festlegung der Stellung des Trägers (18) in Abhängigkeit von der Stellung der Schubrolle (13) gestattet.

3. Kassette nach Anspruch 2, dadurch gekennzeichnet, daß die Platte (14) auf dem Boden (17) der Kassette durch eine elastische Andrückvorrichtung (29, 30) gehalten wird.

4. Kassette nach einem der Ansprüche 2 und 3, dadurch gekennzeichnet, daß die Schubrolle (13) schwingend an dem Träger (14) gelagert ist.

5. Kassette nach Anspruch 1, dadurch gekennzeichnet, daß nur eine ballige Rolle (12) vorgesehen ist, welche in der Nähe der winkelhalbierenden Ebene (25) des Zweiflachs (23, 24) mit dem Winkel $\alpha$ gehalten wird.

6. Kassette nach einem der vorstehenden Ansprüche, dadurch gekennzeichnet, daß die ballige Rolle (12) als Doppelkonus geformt ist.

FIG. 1

FIG. 3

FIG. 2